# EUROPÄISCHE PATENTANMELDUNG

(11) **EP 2 765 405 A1**
(43) Veröffentlichungstag der Anmeldung: **13.08.2014**
(21) Anmeldenummer: 13154767.1
(22) Anmeldetag: 11.02.2013
(51) Int. Cl.: G01N 21/53, G01N 33/487, G01N 33/49, G01N 33/493, G01N 21/47

(54) **Nephelometriesystem**

(71) Anmelder: Siemens Healthcare Diagnostics Products GmbH, 35041 Marburg (DE)
(72) Erfinder: Endermann, Joerg, 35037 Marburg (DE)

(57) **Zusammenfassung**

Ein Nephelometriesystem (1) für ein Analysegerät mit mindestens einer Lichtquelle (8), mindestens einer Aufnahmeposition (4) für eine Messzelle (2), mindestens einer Lichtumlenkvorrichtung (14) und mindestens einem Fotodetektor (6), wobei die Lichtquelle (8), die Aufnahmenposition (4) der Messzelle (2), die Lichtumlenkvorrichtung (14) und der Fotodetektor (6) derart angeordnet sind, dass ein von der Lichtquelle (8) ausgehender Lichtstrahl nach dem Durchtritt durch die Messzelle (2) mittels der Lichtumlenkvorrichtung (14) umgelenkt wird und teilweise auf den Fotodetektor (6) trifft, dadurch gekennzeichnet, dass die Lichtumlenkvorrichtung (14) mindestens einen ersten Teilbereich (30, 30', 30") und einen zweiten Teilbereich (34, 34') aufweist, und wobei sich der erste Teilbereich (30, 30', 30") und der zweite Teilbereich (34, 34') in mindestens einer optischen Eigenschaft unterscheidet.

## Beschreibung

Die Erfindung betrifft ein für ein Analysegerät geeignetes Nephelometriesystem mit einer Lichtquelle, einer Aufnahmeposition für eine Messzelle und einem Fotodetektor, die derart angeordnet sind, dass ein von der Lichtquelle ausgehender Lichtstrahl durch die Messzelle über eine Lichtumlenkvorrichtung auf den Fotodetektor trifft.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z. B. Transferarme mit Greiffunktion, Transportbänder oder drehbare Transporträder, sowie zum Transfer von Flüssigkeiten, wie z. B. Pipettiervorrichtungen. Das Gerät umfasst eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der oder die nachzuweisenden oder zu bestimmenden Substanzen, in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Insbesondere können moderne Analysegeräte mit einem Nephelometriesystem ausgestattet sein. Mittels der Nephelometrie lässt sich die Konzentration feinverteilter, kolloidaler Teilchen in Flüssigkeiten oder Gasen quantitativ bestimmen: Wird eine Suspension kleiner Partikel in einen Lichtstrahl verbracht, so wird ein Teil des eingetretenen Lichtes absorbiert, ein anderer Teil, auch als Primärstrahl bezeichnet, verlässt die Suspension ungestreut und wieder ein anderer Teil wird seitlich zum eintretenden Strahl gestreut. Bei der Nephelometrie wird dieses seitlich austretende Streulicht gemessen.

Die Nephelometrie wird vor allem für den quantitativen oder qualitativen Nachweis von Analyten, beispielsweise Proteinen, eingesetzt, die sich bevorzugt mittels einer spezifische Bindungsreaktion zwischen zwei spezifischen Bindungspartnern, z.B. mittels Antigen-Antikörper-Bindung, nachweisen lassen. Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Unter einem "spezifischen Bindungspartner" ist ein Mitglied eines spezifischen Bindungspaars zu verstehen. Bei den Mitgliedern eines spezifischen Bindungspaars handelt es sich um zwei Moleküle, die jeweils mindestens eine zu einer Struktur des anderen Moleküls komplementäre Struktur aufweisen, wobei die beiden Moleküle sich über eine Bindung der komplementären Strukturen spezifisch zu binden vermögen. Von dem Begriff Molekül sind auch Molekülkomplexe umfasst wie z.B. Enzyme, die aus Apo- und Coenzym bestehen, Proteine, die aus mehreren Untereinheiten bestehen, Lipoproteine bestehend aus Protein und Lipiden, etc. Spezifische Bindungspartner können natürlich vorkommende aber auch z.B. mittels chemischer Synthese, mikrobiologischer Techniken und/oder gentechnischer Verfahren hergestellte Substanzen sein. Zur Illustration des Begriffs spezifischer Bindungspartner, aber nicht als Einschränkung zu verstehend, sind z.B. zu nennen: Thyroxinbindendes Globulin, steoridbindende Proteine, Antikörper, Antigene, Haptene, Enzyme, Lektine, Nukleinsäuren, Repressoren, Oligo- und Polynukleotide, Protein A, Protein G, Avidin, Streptavidin, Biotin, Komplementkomponente C1q, nukleinsäurebindende Proteine, etc. Spezifische Bindungspaare sind beispielsweise: Antikörper-Antigen, Antikörper-Hapten, Operator-Repressor, Nuclease-Nukleotid, Biotin-Avidin, Lektin-Polysaccharid, Steoridsteoridbindendes Protein, Wirkstoff-Wirkstoffrezeptor, Hormon-Hormonrezeptor, Enzym-Substrat, IgG-Protein A, komplementäre Oligo- oder Polynukleotide, etc.

Ein Nephelometriesystem umfasst üblicherweise mindestens eine Lichtquelle und mindestens einen Fotodetektor sowie mindestens eine Aufnahmeposition für eine Messzelle.

Auf dem Markt existieren unterschiedliche Bauweisen, die sich in der Anordnung von Lichtquelle, Aufnahmeposition für die Messzelle und Fotodetektor unterscheiden. Siehe hierzu auch z.B. Kapitel 17, Seite 363 - 387, in Diamandis, E.P. und Christopoulos, T.K.: Immunoassay, Academic Press (1996). Beispielsweise kann in einer Bauweise der Fotodetektor seitlich zum von der Lichtquelle ausgesandten Lichtstrahl angeordnet sein, um das gestreute Licht unter einem Winkelbereich um 90° zur Richtung des von der Lichtquelle ausgesandten Lichtstrahls zu erfassen. Die Intensität des Streulichts welches in Winkelbereiche um 90° zur Richtung des von der Lichtquelle ausgesandten Lichtstrahls gestreut wird, kann relativ niedrig sein, und die Beeinflussung der Messung durch den von der Lichtquelle ausgesandten nicht gestreuten Teil des Lichtstrahls, der als Primärstrahl bezeichnet wird, ist relativ gering. In einer anderen Bauweise können Lichtquelle, Aufnahmeposition und Fotodetektor derart angeordnet sein, dass der Fotodetektor das gestreute Licht unter Winkeln oder Winkelbereichen um die Ausbreitungsrichtung des von der Lichtquelle ausgesandten Lichtstrahls erfasst, in denen die Intensität des Streulichts relativ hoch sein kann. Es stellt sich jedoch das Problem dar, dass den Fotodetektor nicht nur das Streulicht erreicht, sondern auch der Primärstrahl. Da jedoch nur der gestreute Teil des Lichtes zum Messergebnis beitragen soll und Licht des Primärstrahls, das auf den Detektor trifft, letztlich nur zu einer Verschlechterung des Signal-Rausch-Abstandes führt, ist für eine Optimierung des Messergebnisses eine möglichst vollständige Ausblendung des Primärstrahls erforderlich.

Hierfür wurden bislang optische Blenden eingesetzt. Diese werden mittels dünner Befestigungen wie z. B. Drähten im Strahlengang gehalten und hinsichtlich ihrer Größe und Form so angepasst, dass sie einen möglichst großen Teil des Primärstrahls ausblenden, so dass möglichst ausschließlich Streulicht auf den Detektor trifft.

EP 0 997 726 A2 beschreibt eine nephelometrische Detektionseinheit mit optischer In-Prozess-Kontrolle, welche die separate Detektion des Streulichts und des Primärstrahls ermöglicht. Die Trennung des Primästrahls vom Streulicht erfolgt indem der Primärstrahl auf eine speziell geformte Blende, oder einen speziell aufgebauten Spiegel oder Linse mit einem Bereich zur Aufnahme einer Strahlführungs oder - umlenkungseinheit trifft, wobei die Blende, der Spiegel oder die Linse in den Strahlengang eingesetzt ist. Der gestreute Teil des Lichts trifft dabei nicht auf die Blende, den Spiegel oder die Linse. Dieser durchgehende Anteil des Lichts wird hinter der Ebene der Blende, des Spiegels oder der Linse detektiert.

Nachteilig kann hierbei jedoch sein, dass derartige Blenden, Spiegel oder Linsen üblicherweise vergleichsweise filigran und mechanisch empfindlich sind. Gerade die Befestigungsvorrichtungen, die von der Seite in den Lichtstrahl ragen, müssen nämlich besonders dünn sein, um kein Streulicht auszublenden. Dennoch ist es bei einem derartigen Aufbau unvermeidlich, dass ein Teil der Befestigungsvorrichtungen das Streulicht ausblendet und somit die Messung potentiell gestört wird.

Es ist daher Aufgabe der Erfindung, ein Nephelometriesystem der eingangs genannten Art, insbesondere eines zum quantitativen oder qualitativen Nachweis von Analyten in einer Probe, zur Verfügung zu stellen, welches eine verbesserte Messqualität bei gleichzeitig stabilerem mechanischem Aufbau bietet, und bei welchem auf zusätzliche optische Blenden verzichtet werden kann.

Diese Aufgabe wird erfindungsgemäß durch die Bereitstellung eines Nephelometriesystems (1) für ein Analysegerät mit mindestens einer Lichtquelle (8), mindestens einer Aufnahmeposition (4) für eine Messzelle (2), mindestens einer Lichtumlenkvorrichtung (14) und mindestens einem Fotodetektor (6) gelöst, wobei die Lichtquelle (8), die Aufnahmenposition (4) der Messzelle (2), die Lichtumlenkvorrichtung (14) und der Fotodetektor (6) derart angeordnet sind, dass ein von der Lichtquelle (8) ausgehender Lichtstrahl nach dem Durchtritt durch die Messzelle (2) mittels der Lichtumlenkvorrichtung (14) umgelenkt wird und teilweise auf den Fotodetektor (6) trifft und dass die Lichtumlenkvorrichtung (14) mindestens einen ersten Teilbereich (30, 30', 30") und einen zweiten Teilbereich (34, 34') aufweist, wobei sich der erste Teilbereich (30, 30', 30") und der zweite Teilbereich (34, 34') in mindestens einer optischen Eigenschaft unterscheidet.

Unter optischer Eigenschaft ist im Sinne der vorliegenden Erfindung beispielsweise die Reflektionsfähigkeit oder Absorptionsfähigkeit eines optischen Elements zu verstehen.

Bei der Messzelle kann es sich z.B. um eine Küvette handeln, die häufig aus Glas, Kunststoff oder Quarzglas besteht. Auch Durchflussküvetten können im erfindungsgemäßen Nephelometriesystem als Messzelle eingesetzt werden.

Unter einer "Lichtumlenkvorrichtung" ist im Sinne der vorliegenden Erfindung beispielsweise ein optisches Element zu verstehen, das die Ausbreitungsrichtung von Lichtstrahlen durch spekulare Reflexion oder Totalreflexion der Lichtstrahlen an mindestens einer Grenzfläche ändert. Bei spekularer Reflexion oder Totalreflexion an einer Grenzfläche werden Lichtstrahlen so reflektiert, dass der Winkel des einfallenden Lichtstrahls relativ zur Grenzflächennormalen (Einfallswinkel) gleich dem Winkel des ausfallenden Lichtstahls relativ zur Grenzflächennormalen (Ausfallswinkel) ist, und dass der einfallende Lichtstrahl, die Grenzflächennormale und der ausfallende Lichtstrahl in einer Ebene liegen. Eine Lichtumlenkvorrichtung kann beispielsweise aus einem Spiegel oder einem Reflexionsprisma bestehen. Die Weiterleitung des Lichtes zum Fotodetektor kann gezielt auch über einen oder mehrere Lichtleiter erfolgen. Allerdings kann eine erfindungsgemäße Lichtumlenkvorrichtung auch direkt aus einem Lichtleiter bestehen.

Die Erfindung geht dabei von der Überlegung aus, dass eine verbesserte Messqualität insbesondere dadurch erreicht werden könnte, wenn der auf den Fotodetektor gerichtete Primärstrahl gezielt ausgeblendet werden könnte, ohne dass Haltevorrichtungen einer Blende Teile des zu messenden Streulichts ausblenden. Dies ist erreichbar, indem auf im Lichtstrahl angeordnete Blenden vollkommen oder weitgehend verzichtet wird und statt dessen ein Umlenken des Lichtstrahls mittels einer Lichtumlenkvorrichtung erfolgt, wobei gestreute Teile des Lichtstrahls in den Fotodetektor gelenkt werden. Hierbei kann die Lichtumlenkvorrichtung in der Art einer Doppelnutzung einerseits für die Ausblendung oder partielle Ausblendung des Primärstrahls genutzt werden, andererseits kann sie aber auch durch die Umlenkung des Lichtstrahls eine kompaktere Bauweise des Nephelometriesystems ermöglichen. Nicht gestreute und in Vorwärtsrichtung gestreute Anteile des Lichtstrahls können dabei beispielsweise ebenfalls ganz oder teilweise zeitversetzt auf den Fotodetektor gelenkt werden, auf den die gestreuten Teile des Lichtstrahls gelenkt werden und/oder auf mindestens einen weiteren Fotodetektor.

Die mit der Erfindung erzielten Vorteile bestehen insbesondere darin, dass durch Umlenkung nur im Fotodetektor erwünschter Bereiche des Lichtstrahls z.B. mittels gezielter bereichsweiser Manipulation der Reflexionseigenschaften und / oder Transmissionseigenschaften der zur Umlenkung verwendeten Lichtumlenkvorrichtung eine besonders einfache, leicht zu modifizierende und baulich stabile Konstruktion eines Nephelometriesystems möglich wird. Bisher notwendige mittige Blenden im Lichtstrahl mit entsprechend filigranen Haltevorrichtungen können entfallen. Dadurch ergeben sich auch erhebliche Kostenvorteile.

In einer bevorzugten Ausführungsform der erfindungsgemäßen Lichtumlenkvorrichtung trennt diese mindestens einen ersten Lichtstrahlanteil, welcher aus einem ersten Teilbereich der Querschnittsfläche des Lichtstrahls besteht und welcher auf den ersten Teilbereich (30, 30', 30") der Lichtumlenkvorrichtung trifft, räumlich von einem zweiten Lichtstrahlanteil, der aus einem zweiten Teilbereich der Querschnittsfläche des Lichtstrahls besteht und welcher auf einen zweiten Teilbereich (34, 34') der Lichtumlenkvorrichtung trifft.

Beispielsweise können so nicht gestreute Anteile des Lichtstrahls und in Vorwärtsrichtung gestreute Anteile des Lichtstrahls räumlich getrennt werden von gestreuten Anteilen des Lichtstrahls, welche in der Ebene der Lichtumlenkvorrichtung sich außerhalb der Querschnittsfläche des Primärstrahls befinden, indem das Licht aus der Querschnittsfläche des Primärstrahls auf einen ersten Teilbereich (30) der Lichtumlenkvorrichtung trifft, die eine veränderte, beispielsweise verminderte oder erhöhte, Transmissionsfähigkeit und/oder veränderte, beispielsweise verminderte oder erhöhte, Reflektionsfähigkeit aufweist. Analog können beispielsweise Anteile des Lichtstrahls räumlich getrennt werden, die in der Ebene der Lichtumlenkvorrichtung in unterschiedliche Bereiche der Querschnittsfläche des Lichtstrahls außerhalb des Primärstrahls gestreut werden.

Die Unterschiedlichkeit der Teilbereiche in mindestens einer optischen Eigenschaft kann beispielsweise durch Veränderung der optischen Eigenschaft in mindestens des ersten Teilbereichs (30, 30', 30'') und / oder des zweiten Teilbereichs (34, 34') erreicht werden. Dies kann z.B. durch die Veränderung der Reflektionseigenschaften und/oder der Transmissionseigenschaften der Lichtumlenkvorrichtung in mindestens dem ersten Teilbereich (30, 30', 30'') und / oder dem zweiten Teilbereich (34, 34') geschehen.

Bei einem Spiegel, einem Reflektionsprisma, oder einem Lichtleiter könnte beispielsweise der betreffende Teilbereich der Lichtumlenkvorrichtung vollständig, oder teilweise, beispielsweise nur die spiegelnde Grenzfläche, entfernt sein. Dies kann z.B. durch Bohrung, Stanzung, Abtragung, oder sonstige physikalische oder chemische Methoden geschehen.

Alternativ könnte der Teilbereich von einem lichtabsorbierenden und / oder lichtreflektierenden Lack oder einem anderen lichtabsorbierenden und / oder lichtreflektierenden Stoff bedeckt sein.

In besonders einfacher Ausgestaltung ist der Teilbereich jedoch mit einer lichtabsorbierenden und / oder lichtreflektierenden Folie bedeckt. Eine Folie kann besonders leicht zugeschnitten und so in die gewünschte Form gebracht werden.

In vorteilhafter Ausgestaltung ist die Folie dabei lichtabsorbtiv. Dadurch wird eine Reflexion und/oder Transmission nicht erwünschter Bereiche des Lichtstrahls in den Fotodetektor effektiv unterbunden.

In besonders vorteilhafter Ausgestaltung ist die Folie dabei für nicht senkrecht, d. h. schräg einfallendes Licht lichtabsorbtiv, da das Licht bei einer Umlenkung des Lichtstrahls beispielsweise nicht senkrecht auf die Lichtumlenkvorrichtung trifft. Hierbei sind entsprechende Folien zu wählen, die bei schrägem Lichteinfall eine gute Lichtabsorption aufweisen.

Bei einem Reflektionsprisma könnte die räumliche Trennung der Lichtstrahlteile beispielsweise auch durch mindestens eine Veränderung der Reflektionseigenschaften in mindestens einem Teilbereich der mindestens einen Grenzfläche des Reflektionsprisma, an der Totalreflektion erfolgt, erreicht werden. Beispielsweise kann eine Veränderung der Reflektionseigenschaften eines Teilbereichs einer Grenzfläche an der Totalreflektion erfolgt dadurch erreicht werden, dass an das Reflektionsprisma ein Material mit gleichem oder ähnlichem Brechungsindex wie das Material aus dem das Reflektionsprisma gefertigt ist in einem Teilbereich der mindestens einen Grenzfläche, an der Totalreflektion erfolgt, angefügt wird und dadurch die Grenzfläche, an der Totalreflektion erfolgt, in einem Teilbereich entfernt wird und somit in diesem Teilbereich keine Totalreflektion mehr auftritt. Dadurch kann das Licht, das auf diesen Teilbereich fällt in dem angefügten Material weitergeleitet werden, und/oder abgeleitet werden. In einer vorteilhaften Ausführung erfolgt die Weiterleitung und/oder Ableitung des Lichts in diesem Teilbereich durch mindestens einen Lichtleiter.

In einer weiteren Alternative kann die räumliche Trennung der Lichtstrahlteile durch Veränderung der Transmissionseigenschaften, und/oder der Reflektionseigenschaften der Oberfläche des Reflektionsprismas, durch welche der Lichtstrahl in das mindestens eine Reflektionsprisma einkoppelt und/oder auskoppelt, erreicht werden. Beispielsweise kann der Teilbereich der Fläche mit einem lichtabsorbierenden und /oder lichtreflektierenden Lack versehen sein, und/oder mit einer lichtabsorbierenden und / oder lichtreflektierenden Folie bedeckt sein, und/oder einem anderen lichtabsorbierenden, und/oder lichtreflektierenden Stoff, und/oder einem Spiegel versehen sein.

Bei einem Lichtleiter könnte die räumliche Trennung der Lichtstrahlteile beispielsweise durch Veränderung der Transmissionseigenschaften, und/oder der Reflexionseigenschaften, der Oberfläche des Lichtleiters durch welche der Lichtstrahl in den mindestens einen Lichtleiter einkoppelt und/oder auskoppelt erreicht werden. Beispielsweise kann der Teilbereich der Fläche mit einem lichtabsorbierenden und / oder lichtreflektierenden Lack, und/oder mit einer lichtabsorbierenden und / oder lichtreflektierenden Folie, und/oder mit einem Spiegel versehen sein.

Vorteilhafterweise erfolgt die Umlenkung durch die erfinderische Lichtumlenkvorrichtung (14) um einen Winkel von 20° bis 180°, bevorzugt 60° bis 120°, besonders bevorzugt 80° bis 100°, sehr besonders bevorzugt 85° bis 95°, ganz besonders bevorzugt 90°, zur Ausbreitungsrichtung des Zentrums des Lichtstrahls nach dem Durchtritt durch die Messzelle (8).

Bei einer vorteilhaften Ausführungsform des erfinderischen Nephelometriesystems ist der erste Teilbereich(30, 30', 30''), in dem die Reflektionseigenschaften und/oder die Transmissionseigenschaften gegenüber dem zweiten Teilbereich (34, 34') anders sind, derart angeordnet, dass das Zentrum des Lichtstrahlquerschnitts auf diesen ersten Teilbereich trifft. Da die Streuung typischerweise in alle Raumrichtungen erfolgt, ergibt sich ein rotationssymmetrisches Muster im Lichtstrahlquerschnitt um den Primärstrahl herum. Der Primärstrahl liegt dabei beispielsweise im Zentrum des Lichtstrahlquerschnittes. Vorteilhafterweise trifft der gesamte Primärstrahl oder nahezu der gesamte Primärstrahl auf den ersten Teilbereich (30) der Lichtumlenkvorrichtung.

In einer weiteren vorteilhaften Ausführungsform ist der erste Teilbereich (30', 30'') derart angeordnet, dass außerhalb eines vorgegebenen Mindestabstandes vom Zentrum des Lichtstrahls liegende Teile des Lichtstrahls auf den ersten Teilbereich (30', 30'') treffen. Hierdurch kann der lichtumlenkende Bereich der Lichtumlenkvorrichtung nach außen begrenzt werden, was z. B. hinsichtlich der absoluten Normierung des Nephelometriesystems von Vorteil sein kann, da stets nur ein vorgegebener Bereich um den Primärstrahl herum zur Messung verwendet wird und somit die gemessene Querschnittsfläche normiert ist.

Ferner kann der zweite Teilbereich (34, 34') derart angeordnet sein, dass in bestimmte Winkelbereiche gestreutes Licht voneinander separiert werden kann. Dies ist beispielsweise vorteilhaft, da in bestimmte Winkelbereiche gestreutes Licht beispielsweise Informationen zu bestimmten Längenskalen und Formen der streuenden Objekte in der Probe übermittelt.

Falls der Lichtstrahl in schrägem Winkel auf der Lichtumlenkvorrichtung auftrifft, so z. B. in einem Winkel von 45° bei einer Umlenkung um 90° im Falle der Umlenkung durch einen Spiegel, ist aufgrund der Neigung beispielsweise eine elliptische Form des Teilbereichs notwendig, um einen kreisförmigen Querschnitt des Lichtstrahls auszublenden.

In weiterer vorteilhafter Ausgestaltung umfasst die Lichtquelle mindestens einen Laser, und/oder mindestens eine lichtemittierende Diode (LED), und/oder mindestens eine Glühlampe, und/oder mindestens eine Gasentladungslampe.

In besonders vorteilhafter Ausgestaltung umfasst die Lichtquelle mindestens eine Laserdiode. Hierdurch kann in besonders einfacher Weise ein kohärenter und kollimierter Lichtstrahl erzeugt werden, der für die Nephelometrie besonders vorteilhafte Eigenschaften hat. Beispielsweise weist der Lichtstrahl eine geringe Divergenz auf und erfährt daher über die Laufweite vergleichsweise wenig Aufweitung. Dadurch sind Primärstrahl und gestreutes Licht im Fotodetektor besonders gut voneinander abgrenzbar. Dies gilt auch nach Streuung, Bündelung oder Umlenkung des Lichtstrahls mittels Linsen und Spiegeln.

Die Verwendung von mindestens einer Laserdiode als Lichtquelle ermöglicht es in besonders einfacher Ausgestaltung, den ersten Teilbereich (30) derart anzuordnen, dass der gesamte Primärstrahl der Laserdiode auf den ersten Teilbereich (30) trifft. Hierdurch wird von dem Fotodetektor ausschließlich Streulicht aufgenommen und zur Messung verwendet.

In weiterer vorteilhafter Ausgestaltung emittiert die Lichtquelle Licht in Lichtwellenlängenbereichen zwischen 200 nm und 1400 nm. In einer bevorzugten Ausgestaltung emittiert die Lichtquelle Licht in Lichtwellenlängenbereichen zwischen 300 und 1100 nm.

Ein anderer Gegenstand der Erfindung ist ein Analysegerät, welches ein vorgenanntes erfindungsgemäßes Nephelometriesystem umfasst.

Die Erfindung umfasst auch Verfahren zur Bestimmung der Konzentration, Menge und/oder Aktivität mindestens eines Analyten in einer Probe, dadurch gekennzeichnet, dass die Konzentration, Menge und/oder Aktivität des Analyten mit einem der vorgenannten erfindungsgemäßen Nephelometriesysteme bestimmt wird.

Unter einer "Probe" ist im Sinne der Erfindung das Material zu verstehen, dass die nachzuweisende Substanz (den Analyten), vermutlich enthält. Der Begriff Probe umfasst insbesondere biologische Flüssigkeiten von Menschen oder Tieren wie z.B. Blut, Plasma, Serum, Sputum, Exudat, bronchoalveoläre Lavage, Lymphflüsigkeit, Synovialflüssigkeit, Samenflüssigkeit, Vaginalschleim, Feces, Urin, Liquor, aber auch z.B. durch Homogenisation oder Zelllyse für die nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Eine Ausführungsform der Erfindung wird anhand von Zeichnungen exemplarisch näher erläutert. Darin zeigen:
- FIG 1: ein Nephelometriesystem in einem Analysegerät,
- FIG 2: schematisch den Lichtstrahlengang in dem Nephelometriesystem, und
- FIG 3: schematisch die Lichtumlenkvorrichtung zum Umlenken des Lichtstrahls in dem Nephelometriesystem aus Blickrichtung A betrachtet vor (I) und nach (II, III, IV, V) dem Bekleben mit einer Folie.

Gleiche Teile sind in allen Figuren mit denselben Bezugszeichen versehen.

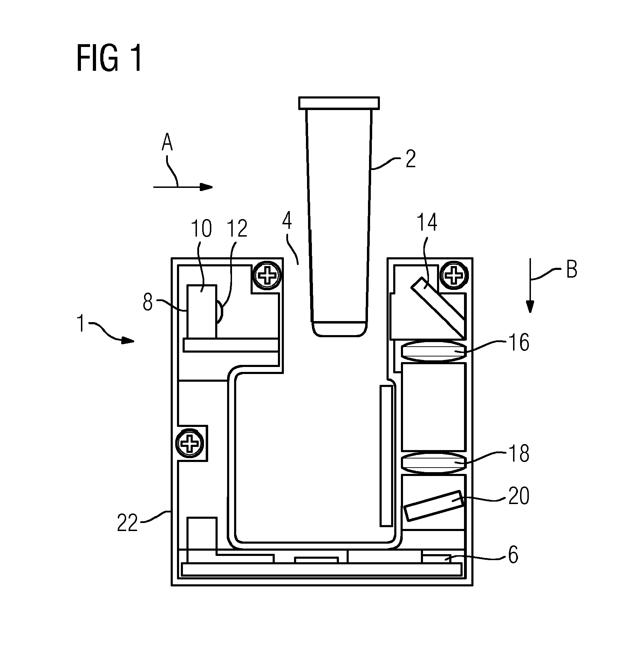

Das Nephelometriesystem (1) gemäß der FIG 1 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Transporteinrichtungen sowie weiterhin eine Steuereinheit zum automatisierten Auswerten der Analysen.

Das Nephelometriesystem (1) umfasst eine Aufnahmeposition (4) für eine Messzelle (2). Es umfasst weiterhin einen Fotodetektor (6), der die Stärke von Lichteinfall auf einer vorgegebenen Fläche positionsgenau messen kann, und eine Lichtquelle (8), die eine Laserdiode (10) und eine vorgeschaltete Linse (12) umfasst. Die Lichtquelle (8) emittiert somit einen Lichtstrahl kohärenten und kollimierten Laserlichts. Dieser ist in die durch einen Pfeil angezeigte Richtung A gerichtet und trifft auf die Messzelle (2) in der Aufnahmeposition (4).

In gerader Linie von Lichtquelle (8) über die Aufnahmeposition (4) in Richtung A ist ein Spiegel als Lichtumlenkvorrichtung (14) angeordnet, dessen Oberfläche um 45° gegenüber der Richtung A geneigt ist. In gerader Linie ausgehend vom Spiegel als Lichtumlenkvorrichtung (14) sind in der wiederum durch einen Pfeil angezeigten Richtung B zwei Linsen (16, 18), die als Sammellinsen ausgelegt sind, ein Filter (20) und schließlich der Fotodetektor (6) angeordnet. Das Filter (20) verhindert senkrechte Reflexion. Die Richtung B ist um 90° gegenüber der Richtung A abgewinkelt.

Der Fotodetektor (6) ist an die erwähnte Steuereinheit angeschlossen und ermöglicht hier eine Auswertung der Streuung des von der Lichtquelle (8) emittierten Laserstrahls. Sämtliche beschriebenen Bauteile sind in einem Gehäuse (22) untergebracht.

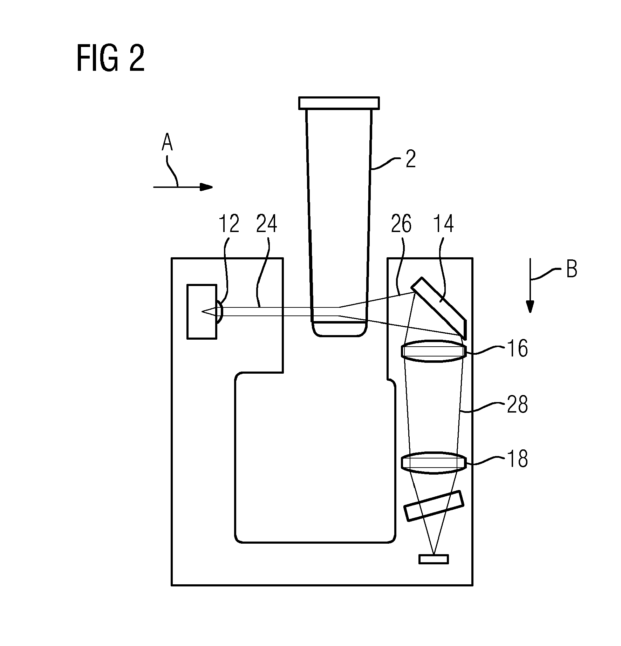

Zur Verdeutlichung des Strahlengangs des Laserstrahls ist dieser in FIG 2 dargestellt. Hierbei sind lediglich die optisch relevanten Teile Messzelle (2), Linse (12), Spiegel als Lichtumlenkvorrichtung (14) und Linsen (16, 18) explizit dargestellt. Die übrigen Bauteile sind lediglich in der Art einer Silhouette dargestellt.

Ausgehend von der Laserdiode (10) wird das Licht von der Linse (12) in einen parallel ausgerichteten Laserstrahl kollimiert, der sich in einem ersten Abschnitt (24) weder verengt, noch verbreitert. Dieser Laserstrahl trifft am Ende des ersten Abschnitts (24) auf die Messzelle (2).

Durch in der Messzelle (2) befindliche Schwebeteilchen, die z. B. im Verlauf einer Antigen-Antikörper-Reaktion entstehen oder sich vermindern, wird der Laserstrahl gestreut, so dass nur noch ein Teil ungestreut die Messzelle (2) in den zweiten Abschnitt (26) verlässt. Bei diesem Teil handelt es sich um den Primärstrahl. Ein weiterer Teil des Lichts wird gestreut, was im zweiten Abschnitt (26) zu einer Aufweitung des Lichtstrahls führt. Im zweiten Abschnitt trifft das Licht dabei auf den Spiegel als Lichtumlenkvorrichtung (14), der es in Richtung B umlenkt, so dass es auf die Linse (16) trifft.

Im dritten Abschnitt (28) trifft das Licht schließlich auf die Linsen (16, 18), wird dabei fokussiert und schließlich in den Fotodetektor (6) geführt, wo die Stärke des Streulichts ermittelt wird.

In der Regel wird die Lichtstärke des Streulichts wesentlich geringer sein als die des noch in den Fotodetektor (6) eintretenden Primärstrahls. Zur Verbesserung des Signal-Rausch-Verhältnisses kann es bei der Messung des Streulichts daher vorteilhaft sein, wenn der Primärstrahl ausgeblendet wird, so dass nur gestreute Lichtanteile in den Fotodetektor (6) treffen.

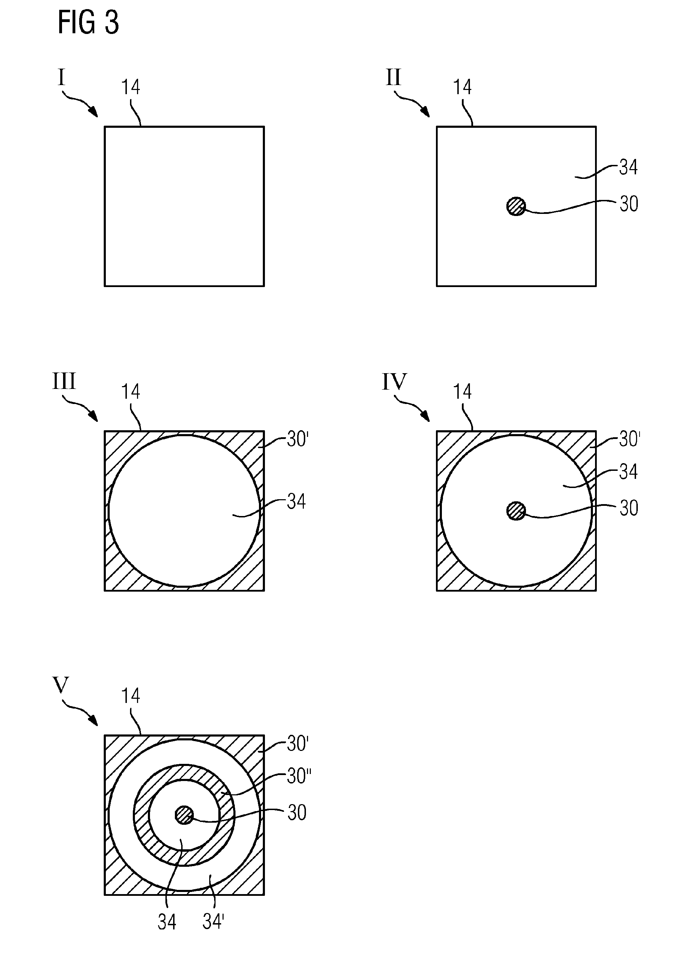

Hierzu ist der Spiegel als Lichtumlenkvorrichtung (14) zum Beispiel mit einer Folie versehen, die die Reflexionsfähigkeit vermindert. Dies ist in FIG 3 gezeigt, wo der Spiegel als Lichtumlenkvorrichtung (14) ohne Folie dargestellt ist (I), und der mit Folie im ersten Teilbereich (30, 30', 30'') versehene Spiegel, mit dem von Folie freigelassenen zweiten Teilbereich (34, 34'). Der Spiegel als Lichtumlenkvorrichtung (14) ist dabei jeweils aus Blickrichtung A aus FIG 1, 2 dargestellt.

Der erste Teilbereich (30, 30', 30'') ist so auf dem Spiegel angeordnet, dass der Primärstrahl ausgeblendet wird. Der erste Teilbereich (30) erscheint aus Blickrichtung A in der Projektion kreisförmig und ist um das Zentrum, d. h. den Mittelpunkt des auf den Spiegel treffenden Primärstrahls zentriert (II, IV, V). Der erste Teilbereich (30') beginnt konzentrisch zum ersten Teilbereich (30) in einem Abstand und erstreckt sich bis zur Außenkante des Spiegels (III, IV, V). Der erste Teilbereich (30'') ist zwischen dem ersten Teilbereich (30) und (30') angeordnet (V), um z.B. in bestimmte Winkelbereiche gestreutes Licht voneinander getrennt messen zu können.

Aus Blickrichtung A betrachtet bleibt hier in der Projektion ein von konzentrischen Kreisen begrenzter Bereich des Spiegels als Lichtumlenkvorrichtung (14) mit reflektierender Oberfläche übrig. Aus der Richtung der Flächennormalen des Spiegels betrachtet erscheint die verbleibende reflektierende Oberfläche jedoch als von konzentrischen Ellipsen begrenzte Fläche. Dieser Bereich bietet eine klar normierte Oberfläche, innerhalb derer Streulicht weitergeleitet wird und verbessert somit das Messergebnis einerseits hinsichtlich des Signal-Rausch-Verhältnisses, andererseits auch hinsichtlich der Normierbarkeit.

Die beschriebenen Kreisformen ergeben sich wie bereits erwähnt nur bei Betrachtung aus Blickrichtung A. Bei einer Betrachtung des Spiegels (14) aus einer senkrecht zu dessen Oberfläche stehenden Richtung ergeben sich hier eher elliptische Formen. Die tatsächlich auszuschneidende Form der Folien ergibt sich somit aus dem Erfordernis, dass aus Richtung der Lichtquelle die besagte Kreisform sichtbar sein soll und hängt somit von der Neigung des Spiegels als Lichtumlenkvorrichtung (14) gegenüber der Emissionsrichtung der Lichtquelle (8) ab. Die Folie im ersten Teilbereich (30, 30', 30'') selbst ist derart gestaltet, dass sie Licht, und insbesondere schräg einfallendes Licht nicht reflektiert und lichtabsorptiv ist. Alternativ zur Folie könnten im ersten Teilbereich (30, 30', 30'') die Reflexionseigenschaften auch anderweitig verändert werden, beispielsweise durch Lackierung der Oberfläche, Entfernung von Teilen des Spiegels beispielsweise durch Bohrung, Stanzung, Abtragung oder rückseitige Entfernung der Spiegelfläche.

Die erfindungsgemäßen Gegenstände und Verfahren der vorliegenden Patentanmeldung werden außerdem in den Patentansprüchen beschrieben.

### Bezugszeichenliste

- 1: Nephelometriesystem
- 2: Messzelle
- 4: Aufnahmeposition
- 6: Fotodetektor
- 8: Lichtquelle
- 10: Laserdiode
- 12: Linse
- 14: Lichtumlenkvorrichtung
- 16, 18: Linsen
- 20: Filter
- 22: Gehäuse
- 24: erster Abschnitt des Lichtstrahlweges
- 26: zweiter Abschnitt des Lichtstrahlweges
- 28: dritter Abschnitt des Lichtstrahlweges
- 30, 30', 30'': erster Teilbereich der Lichtumlenkvorrichtung
- 34, 34': zweiter Teilbereich der Lichtumlenkvorrichtung
- A, B: Richtung

## Patentansprüche

**1.** Nephelometriesystem (1) für ein Analysegerät mit mindestens einer Lichtquelle (8), mindestens einer Aufnahmeposition (4) für eine Messzelle (2), mindestens einer Lichtumlenkvorrichtung (14) und mindestens einem Fotodetektor (6), wobei die Lichtquelle (8), die Aufnahmenposition (4) der Messzelle (2), die Lichtumlenkvorrichtung (14) und der Fotodetektor (6) derart angeordnet sind, dass ein von der Lichtquelle (8) ausgehender Lichtstrahl nach dem Durchtritt durch die Messzelle (2) mittels der Lichtumlenkvorrichtung (14) umgelenkt wird und teilweise auf den Fotodetektor (6) trifft, **dadurch gekennzeichnet, dass** die Lichtumlenkvorrichtung (14) mindestens einen ersten Teilbereich (30, 30', 30'') und einen zweiten Teilbereich (34, 34') aufweist, und wobei sich der erste Teilbereich (30, 30', 30'') und der zweite Teilbereich (34, 34') in mindestens einer optischen Eigenschaft unterscheidet.

**2.** Nephelometriesystem (1) nach Anspruch 1, wobei sich der erste Teilbereich (30, 30', 30'') und der zweite Teilbereich (34, 34') der Lichtumlenkvorrichtung in der Reflektionsfähigkeit und / oder Absorptionsfähigkeit unterscheidet.

**3.** Nephelometriesystem (1) nach einem der vorhergehenden Ansprüche, wobei die Lichtumlenkvorrichtung mindestens einen ersten Lichtstrahlanteil welcher auf den ersten Teilbereich (30, 30', 30'') der Lichtumlenkvorrichtung trifft, räumlich von einem zweiten Lichtstrahlanteil trennt welcher auf einen zweiten Teilbereich (34, 34') der Lichtumlenkvorrichtung trifft.

**4.** Nephelometriesystem (1) nach einem der vorhergehenden Ansprüche, wobei die Umlenkung durch die Lichtumlenkvorrichtung (14) um einen Winkel von 20° bis 180°, bevorzugt 60° bis 120°, besonders bevorzugt 80° bis 100°, sehr besonders bevorzugt 85° bis 95°, ganz besonders bevorzugt 90°, zur Ausbreitungsrichtung des Zentrums des Lichtstrahls nach dem Durchtritt durch die Messzelle (8) erfolgt.

**4.** Nephelometriesystem (1) nach einem der vorhergehenden Ansprüche, wobei der gesamte Primärstrahl oder nahezu der gesamte Primärstrahl auf den ersten Teilbereich (30) der Lichtumlenkvorrichtung trifft.

**5.** Nephelometriesystem (1) nach einem der vorhergehenden Ansprüche, wobei der außerhalb eines vorgegebenen Mindestabstandes vom Zentrum des Lichtstrahls liegender Lichtstrahlanteil auf den ersten Teilbereich (30') der Lichtumlenkvorrichtung trifft.

**6.** Nephelometriesystem (1) nach einem der vorhergehenden Ansprüche, bei dem die Lichtquelle (8) mindestens eine Laserdiode (10) und/oder mindestens einen Laser, und/oder mindestens eine lichtemittierende Diode (LED), und/oder mindestens eine Glühlampe, und/oder mindestens eine Gasentladungslampe umfasst.

**7.** Nephelometriesystem (1) nach einem der vorhergehenden Ansprüche, bei dem der erste Teilbereich (30, 30', 30'') der Lichtumlenkvorrichtung von einer lichtabsorbierenden und / oder lichtreflektierenden Folie, einem lichtabsorbierenden und / oder lichtreflektierenden Lack oder einem anderen lichtabsorbierenden und / oder lichtreflektierenden Stoff bedeckt ist.

**8.** Nephelometriesystem (1) nach einem der vorhergehenden Ansprüche, bei dem der erste Teilbereich (30, 30', 30'') der Lichtumlenkvorrichtung vollständig, oder teilweise, beispielsweise nur die spiegelnde Grenzfläche, entfernt ist.

**9.** Nephelometriesystem (1) nach einem der vorhergehenden Ansprüche, wobei der Primärstrahl nach dem Durchtritt durch die Messzelle auf mindestens einen Fotodetektor trifft.

**10.** Nephelometriesystem (1) nach einem der vorhergehenden Ansprüche, bei dem die Lichtumlenkvorrichtung mindestens einen Spiegel, oder ein Reflektionsprisma, oder einen Lichtleiter umfasst.

**11.** Analysegerät umfassend ein Nephelometriesystem (1) nach einem der vorhergehenden Ansprüche.

**12.** Verfahren zur Bestimmung der Konzentration, Menge und/oder Aktivität mindestens eines Analyten in einer Probe **dadurch gekennzeichnet, dass** die Konzentration, Menge und/oder Aktivität des Analyten mit einem Nephelometriesystem gemäß einem der Ansprüche 1 - 10 bestimmt wird.

**13.** Verfahren nach Anspruch 12, wobei es sich bei der Probe um eine menschliche oder tierische Körperflüssigkeit handelt, vorzugsweise Vollblut, Blutplasma, Serum, Liquor oder Urin.
